# EUROPEAN PATENT APPLICATION

(11) **EP 4 389 829 A1**
(43) Date of publication of application: **26.06.2024**
(21) Application number: 22216001.2
(22) Date of filing: 22.12.2022
(51) Int. Cl.: C09D 5/00

(54) **AQUEOUS TINTING BASE, KIT-OF-PARTS TINTING SYSTEM COMPRISING THE TINTING BASE, AQUEOUS COATING FORMULATION OBTAINED FROM THE KIT-OF-PARTS TINTING SYSTEM, AND USE OF THE AQUEOUS COATING FORMULATION**

(71) Applicant: DAW SE, 64372 Ober-Ramstadt (DE)
(72) Inventor: MAGNUSSON, Malin, 43360 Sävedalen (SE); OLSSON, Yvonne, 51996 Fotskäl (SE)
(74) Representative: Metten, Karl-Heinz

(57) **Abstract**

The present invention refers to an aqueous transparent tinting base having a pH of 10,0 to 12,5 and comprising a) polymeric organic binder, b) organic rheology modifier, c) inorganic rheology modifier, d) alkali metal siliconate, e) filler, f) dispersing agent, g) wetting agent and i) water, wherein said aqueous tinting base is free of titanium dioxide. The invention further refers to an aqueous colored tinting base, having a pH of 10,0 to 12,5 and comprising a) polymeric organic binder based on an aqueous polymer dispersion, b) organic rheology modifier, c) inorganic rheology modifier, d) alkali metal siliconate, e) filler, f) dispersing agent, g) wetting agent, h) pigment and i) water. The invention further refers to a kit-of-parts tinting system for adjusting the color of coating systems comprising a) a tinting base of the invention and b) one or a multitude of aqueous tinting compositions containing a pigment. The invention also addresses an aqueous coating formulation obtained by mixing components a) and b) of the kit-of-parts tinting system of the invention as well as the use of the aqueous coating formulation according of the invention for coating interior walls or ceilings.

## Description

The present invention relates to aqueous tinting bases as well as to a kit-of-parts tinting system comprising a tinting base and at least one, in particular a multitude of aqueous tinting compositions, in particular tinting pastes. Further, the present invention relates to an aqueous coating formulation obtained from the kit-of-parts tinting system and to the use of the aqueous coating formulation for coating interior walls and/or ceilings.

Colored coating materials used for both DIY purposes and professional coatings are in a multitude of cases prepared from a base paint which has been tinted with a so-called tinting paste. This allows a large amount of a tinting base to be kept on hand while employing a range of various tinting pastes in smaller amounts to obtain the desired color for painting interior as well as exterior walls and ceilings.

Keeping a base paint as well as in particular a variety of tinting pastes on hand so that they can be used on demand necessitates that no harm is caused by bacterial or fungicidal contamination. Both bacteria and mould spores are ubiquitous. Once a paint receptable has been opened for use contamination can usually no longer be prevented. For this reason, tinting bases as well as tinting pastes have regularly been provided with organic biocides, so-called in-can preservatives. However, both for environmental and health reasons the use of organic biocides is restricted in many countries. In an attempt to render a paint formulation protected against bacterial and/or fungicidal contamination the pH of these systems has been raised even up to 11 and above 11. However, in many cases it was found that pH stability presents a problem, i.e. the pH value decreases rather swiftly to values even below pH 8 upon regular storage times. In some other cases increasing the pH to values of about 11 generates formulations the viscosity of which is no longer stable over a sufficient period of time. In some other cases it was found that while having accomplished a certain degree of pH stability as well as viscosity stability phase separation may become a problem upon mixing various tinting pastes with a tinting base.

It would have been desirable to arrive at tinting systems which are no longer facing the problems outlined above. Hence, the object underlying the present invention has been to provide a coating formulation which is robust against bacterial and fungicidal contamination even without having to rely on organic biocides and which in particular allows for long term pH and viscosity stability. It has in particular been an object of the present invention to provide tinting systems comprising a tinting base and a tinting paste which upon mixing do not tend to exhibit any or significant phase separation.

Therefore, an aqueous tinting base according to a first embodiment has been found having a pH in the range of 10,0 to 12,5, preferably in the range of 10,5 to 12,0 and more preferably in the range of 11,0 to 11,5, and comprising or being formed of
a) at least one polymeric organic binder based on an aqueous polymer dispersion,
b) at least one organic rheology modifier,
c) at least one inorganic rheology modifier,
d) at least one alkali metal siliconate, preferably potassium methyl siliconate or potassium ethyl siliconate and most preferred potassium methyl siliconate,
e) at least one filler, in particular at least one inorganic filler and/or, in particular expanded, polymeric microspheres,
f) at least one wetting agent, in particular at least one non-ionic wetting agent, and
h) water,
wherein said aqueous tinting base is free of titanium dioxide, in particular free of any pigments.

The aqueous tinting base according to the first embodiment is preferably a transparent tinting base, in particular if free of any pigments.

Further, an aqueous tinting base according to a second embodiment has been found having a pH in the range of 10,0 to 12,5, preferably in the range of 10,5 to 12,0 and more preferably in the range of 11,0 to 11,5, and comprising or being formed of
a) at least one polymeric organic binder based on an aqueous polymer dispersion,
b) at least one organic rheology modifier,
c) at least one inorganic rheology modifier,
d) at least one alkali metal siliconate, preferably potassium methyl siliconate or potassium ethyl siliconate and most preferred potassium methyl siliconate,
e) at least one filler, in particular at least one inorganic filler and/or, in particular expanded, polymeric microspheres,
f) at least one wetting agent, in particular at least one non-ionic wetting agent,
g) at least one pigment, in particular titanium dioxide, and
h) water.

The aqueous tinting base according to the second embodiment preferably is a colored tinting base, in particular a white tinting base if containing titanium dioxide as pigment.

The aqueous tinting bases according to the invention have a pronounced protection against bacterial and fungicidal contamination even if free of any organic in-can preservatives. Accordingly, in one embodiment the aqueous tinting bases of the present invention are free of any organic in-can preservatives, preferably free of any organic preservatives. Moreover, it has been surprisingly found that even though being preservative-free the aqueous tinting bases according to the invention exhibit a significant viscosity stability. In the meaning of the present invention the aqueous tinting bases are considered preservative-free in accordance with the *"*Vergabekriterien" für "BLAUER ENGEL - Das Umweltzeichen" der RAL gemeinnützige GmbH betreffend "Emissionsarme Innenwandfarben DE-UZ 102" ("Version 2") of January 2019 (Criteria for awarding the eco-label BLAUER ENGEL of RAL gemeinnützige GmbH concerning "Low-emission interior interior wall paints de-UZ 102) (Version 2; January 2019 edition) if they contain no preservatives or preservatives related to the individual substance (including formaldehyde), in an amount < 2 ppm, and in relation to CIT (5-chloro-2-methyl-4-isothiazoline) in an amount < 0.5 ppm, and in relation to BIT (1,2-benzisothiazol-3(2H)-one) in an amount < 1,5 ppm.

Suitable wetting agents in particular comprise or consist of at least one non-ionic surfactant. Such non-ionic surfactants are preferably selected from the group consisting of alkyl polyethylene glycol ethers, ethoxylated fatty acids, ethoxylated fatty alcohols, alkylpolyglycosides, sorbitan ester, alkyne diolethoxylates, ethylene oxide and propylene oxide block copolymers, adducts of ethylene oxide and propylene oxide to alcohols, alkyl phenol ethoxylates and mixtures thereof. Most preferred with the aqueous tinting base according to the present invention alkylene oxide/ethylene diamine copolymers (also referred to as alkoxylated ethylene diamine) and/or ethoxylated fatty alcohols and/or alkyl phenol ethoxylates are used as wetting agents wherein alkylene oxide/ethylene diamine block copolymers and in particular ethoxylated fatty alcohols and alkyl phenol ethoxylates, alone or in combination, are particularly preferred. Particularly reliable results are obtained with ethylene diamine EO/PO block copolymers and/or ethoxylated C12-16 fatty alcohols, more preferably ethoxylated fatty alcohols having 4 to 12 or 5 to 10 ethylene oxide moieties, as wetting agent. By employing wetting agents, in particular those listed above, aqueous tinting bases are obtained which upon being tinted with an aqueous tinting compositions furnish dried coating systems which exhibit a reduced rub-out as well as a stable tinting strength. Moreover, these aqueous tinting bases have proven to be compatible with most tinting pastes, i.e. not yielding any significant phase separation upon mixing even after extended periods of time.

In a particularly preferred embodiment the tinting bases of the present invention contain a first non-ionic wetting agent which is an ethoxylated fatty alcohol, preferably an ethoxylated C12-16 fatty alcohol, more preferably an ethoxylated fatty alcohol having 4 to 12 or 5 to 10 ethylene oxide moieties, and a second non-ionic wetting agent which is different from the first non-ionic wetting agent, in particular an alkylene oxide/ethylene diamine copolymer, preferably an alkylene oxide/ethylene diamine block copolymer, more preferably an ethylene diamine EO/PO block copolymer. In another preferred embodiment the tinting bases of the present invention contain a first non-ionic wetting agent which is an alkyl phenol ethoxylates, and a second non-ionic wetting agent which is different from the first non-ionic wetting agent, in particular an alkylene oxide/ethylene diamine copolymer, preferably an alkylene oxide/ethylene diamine block copolymer, more preferably an ethylene diamine EO/PO block copolymer.

By incorporating a wetting agent in the aqueous tinting bases according to the invention it has thus surprisingly been found that compatibility with a great variety of tinting pastes can be improved, thereby mitigating or avoiding the problem of phase separation. In addition, it has surprisingly been found that in this manner a more stable tinting strength can be guaranteed and also the rub-out of the coatings obtained with the aqueous coating formulations obtained by use of the aqueous tinting pastes of the present invention. Without being bound by theory it is believed that the afore-mentioned advantages can be attributed to the co-use of components d) and f), in particular in the presence of components b) and c).

Reliable results in connection with achieving the object underlying the present invention can in particular be obtained with aqueous tinting bases wherein the aqueous polymer dispersion of the polymeric organic binder has a pH in the range of 9,0 to 12,5, preferably in the range of 9,5 to 12,0 and more preferably in the range of 10,0 to 11,5 or 10,0 to below 11,5. Accordingly, those polymeric organic binders are preferred which are stable at or above a pH of 9,0, preferably at or above 10,0. Particularly suitable polymeric organic binders are selected from the group consisting of vinylacetate copolymers, in particular vinylacetate/ethylene copolymers, hybrid binder, in particular organo-silicate hybrid binder, vinylaromatic copolymers, in particular styrene/acrylate copolymers, pure acrylic copolymers, and mixtures thereof. Pure acrylates comprise homopolymers and in particular copolymers of (meth)acrylates, i.e. acrylates and/or, in particular and, methacrylates, optionally also with (meth)acrylic acid, i.e. acrylic and/or methacrylic acid, as comonomer building block. According to a preferred embodiment pure acrylates comprise a copolymer of acrylates and methacrylates or consist thereof.

The pH value of the tinting bases of the present invention as well as of the aqueous polymer dispersion of the polymeric organic binder can be determined in accordance with DIN 55659-1:2012-1 at a temperature of 23 ± 2 °C. For this purpose pH electrodes with a glass membrane can be used. Such suitable pH meter is, for example, the SevenCompact meter (measuring range pH 0.00-14.00) from Mettler Toledo using the InLab Viscous Pro electrode, also from Mettler Toledo.

The organic rheology modifiers of the aqueous tinting bases of the present invention are preferably selected from the group consisting of hydrophobically modified ethylene oxide urethane (HEUR) rheology modifiers, urea modified polyurethanes, amide ester-based rheology modifiers, amide ether-based rheology modifiers, cellulose-based rheology modifiers and mixtures thereof. Most preferred among the at least one organic rheology modifier are non-ionic associative polyurethane-based thickeners or cellulose-based rheology modifiers or mixtures of both.

In a preferred embodiment at least one inorganic rheology modifier of the aqueous tinting bases according to the present invention are selected from the group consisting of clay, organically modified clay, silicas, fumed silica, in particular hydrophobic fumed silica, colloidal silica, precipitated silica, organically modified laminar silicates and mixtures thereof. Among these inorganic rheology modifier magnesium alumino silicates are particularly preferred, in particular in the form of nano-sized particles. Also preferred are organically modified smectites and more in particular organically modified hectorite or organically modified saponite which individually or in combination can be used alternatively or in addition to magnesium alumino silicates.

Suitable filler materials which can be used with the aqueous tinting bases according to the present invention are selected from the group consisting of silicate fillers, calcined fillers, sulfate fillers, mineral fillers, synthetic fillers, carbonate fillers, polymeric microspheres, in particular expanded polymeric microspheres, and mixtures thereof.

Suitable silicate fillers comprise among others ring silicates, chain silicates, sheet silicates, framework silicates, technical silicates and mixtures thereof. Aluminum silicates are particularly preferred. Particularly useful candidates among the silicate fillers comprise feldspar, quartzite, vulcanite, and siliceous earth such as diatomaceous earth. Of course, any mixtures of the above-mentioned silicate types can be used. Anhydrous kaolin has been found to represent her rather suitable calcined filler material. Suitable mineral fillers include alkaline earth metal oxides. And, carbonate fillers such as calcium carbonate, dolomite, aragonite or mixtures thereof are also preferred with the water-borne coating composition of the present invention. In a further embodiment, in particular expanded, polymeric microspheres are also used as filler material in a preferred embodiment.

The aqueous tinting base according to the present invention comprise at least one alkali metal siliconate. In preferred embodiments potassium methyl siliconate or potassium ethyl siliconate or a mixture thereof are employed. Potassium methyl siliconate is most preferred.

The aqueous tinting base of the present invention preferably further comprises at least one dispersing agent (component i)) which preferably is or comprises at least one anionic surfactant. Said anionic surfactant preferably comprises at least one sodium salt of an acrylic polymer, in particular an aqueous system comprising at least one sodium salt of an acrylic polymer.

The aqueous tinting base according to a second embodiment of the present invention preferably comprises at least one pigment which is selected from the group consisting of titanium dioxide, iron oxide, zinc oxide, chromium oxide, cobalt oxides, mixed oxides of cobalt and aluminum, phthalocyanine pigments, spinel pigments, nickel titanate, chromium titanate, manganese titan rutile, rutile mixed phases, bismuth vanadate, ultramarine blue, sulfides of the rare earths, preferably zinc sulfide, zinc oxide, soot, iron oxide, chromium oxide, cobalt blue, barite, nickel titanate, phthalocyanine pigment, spinel pigment, chromium titanate and mixtures thereof. Among these pigments titanium dioxide is most preferred.

The aqueous tinting bases according to the present invention can contain at least one inorganic binder, in particular at least one water glass and/or silica sol. Preferably, the aqueous tinting bases according to the present invention are free of any water glass and/or, in particular and, free of any silica sol.

Preferred embodiments of the aqueous tinting base according to the first embodiment, i.e. preferred aqueous transparent tinting bases comprise a polymeric organic binder dispersion based on pure acrylates, in particular in the form of a copolymer of acrylates and methacrylates, a non-ionic associative polyurethane-based thickener and/or, in particular and, a cellulose-based rheology modifier as organic rheology modifier, magnesium alumino silicate as inorganic rheology modifier, an alkali metal siliconate, in particular potassium methyl siliconate, at least one, in particular two wetting agents, preferably alkyl phenol ethoxylates and/or, in particular and, alkoxylated ethylenediamine, and at least one filler, in particular expanded polymeric microspheres, more preferably expanded polymeric microspheres. Optionally a dispersing agent, in particular anionic surfactants such as the sodium salt of an acrylic polymer, and/or additives such as pH regulators, e.g. potassium hydroxide, and defoamer such as polyether and/or polysiloxane can be present as well. These transparent tinting bases preferably do not contain any titanium dioxide, in particular they do not contain any pigments. Particularly preferred aqueous tinting bases according to the first embodiment, i.e. preferred aqueous transparent tinting bases comprise a polymeric organic binder dispersion based on pure acrylates in the form of a copolymer of acrylates and methacrylates, a non-ionic associative polyurethane-based thickener and a cellulose-based rheology modifier as organic rheology modifier, magnesium alumino silicate as inorganic rheology modifier, potassium methyl siliconate, as wetting agents alkyl phenol ethoxylates and/or, in particular and, alkoxylated ethylenediamine, and at least one filler, in particular expanded polymeric microspheres, more preferably expanded polymeric microspheres.

In a particularly preferred embodiment the aqueous tinting base according to the first embodiment of the invention comprises
5,0 to 32,0 wt.-%, in particular 10,0 to 28,0 wt.-%, of component a) (solids content),
0,2 to 5,0 wt.-%, in particular 0,4 to 2,5 wt.-%, of component b),
0,2 to 4,0 wt.-%, in particular 0,3 to 2,0 wt.-%, of component c),
0,1 to 3,0 wt.-%, in particular 0,2 to 1,5 wt.-%, of component d),
5,0 to 25,0 wt.-%, in particular 10,0 to 20,0 wt.-%, of component e),
0,05 to 1,5 wt.-%, in particular 0,1 to 1,2 wt.-%, of component f),
30,0 to 75,0 wt.-%, in particular 40,0 to 65,0 wt.-%, of component h), and optionally
0 to 1,0 wt.-%, in particular 0,1 to 0,8 wt.-%, of component i),
wherein the components forming the aqueous tinting base always add up to 100,0 wt.-%.

Preferred embodiments of the aqueous tinting base according to the second embodiment, i.e. preferred aqueous colored tinting bases comprise a polymeric organic binder dispersion based on pure acrylates, in particular in the form of a copolymer of acrylates and methacrylates, a non-ionic associative polyurethane-based thickener and/or, in particular and, a cellulose-based rheology modifier as organic rheology modifier, magnesium alumino silicate as inorganic rheology modifier, an alkali metal siliconate, in particular potassium methyl siliconate, at least one, in particular two wetting agents, preferably alkyl phenol ethoxylates and/or, in particular and, alkoxylated ethylenediamine, at least one filler, in particular expanded polymeric microspheres, and at least one pigment, in particular titanium dioxide. Optionally a dispersing agent, in particular anionic surfactants such as the sodium salt of an acrylic polymer, and/or additives such as pH regulators, e.g. potassium hydroxide, and defoamer such as polyether and/or polysiloxane can be present as well. Particularly preferred aqueous tinting base according to the second embodiment, i.e. preferred aqueous colored tinting bases comprise a polymeric organic binder dispersion based on pure acrylates in the form of a copolymer of acrylates and methacrylates, a non-ionic associative polyurethane-based thickener and a cellulose-based rheology modifier as organic rheology modifier, magnesium alumino silicate as inorganic rheology modifier, potassium methyl siliconate, as wetting agent alkyl phenol ethoxylates and/or, in particular and, alkoxylated ethylenediamine, at least one filler in the form of expanded polymeric microspheres, more preferably in the form of expanded polymeric microspheres, and at least one pigment, in particular titanium dioxide.

In a particularly preferred embodiment the aqueous tinting base according to the second embodiment of the invention comprises
5,0 to 32,0 wt.-%, in particular 10,0 to 28,0 wt.-%, of component a) (solids content),
0,1 to 5,0 wt.-%, in particular 0,3 to 2,5 wt.-%, of component b),
01, to 4,0 wt.-%, in particular 0,3 to 2,0 wt.-%, of component c),
0,1 to 3,0 wt.-%, in particular 0,2 to 1,5 wt.-%, of component d),
5,0 to 25,0 wt.-%, in particular 10,0 to 20,0 wt.-%, of component e),
0,05 to 1,5 wt.-%, in particular 0,1 to 1,2 wt.-%, of component f),
5,0 to 30,0 wt.-%, in particular 10,0 to 25,0 wt.-%, of component g),
30,0 to 75,0 wt.-%, in particular 40,0 to 65,0 wt.-%, of component h), and optionally
0 to 1,0 wt.-%, in particular 0,1 to 0,8 wt.-%, of component i),
wherein the components forming the aqueous tinting base always add up to 100,0 wt.-%.

The object of the present invention has also been solved by a kit-of-parts tinting system comprising a) at least one tinting base according to the present invention and b) at least two, in particular at least three aqueous tinting compositions, containing at least one pigment, in particular tinting pastes. In general, these aqueous tinting compositions, preferably tinting pastes, can contain preservatives such as organic biocides but are preferably preservative-free.

With the kit-of-parts tinting system according to the present invention aqueous coating formulations can be obtained by mixing components a) and b) of said kit-of-parts tinting system. These tinted aqueous coating formulations can in particular be used for coating interior walls and/or ceilings.

With the present invention aqueous tinting bases have surprisingly been found which exhibit an improved performance as to viscosity stability even over extended storage periods, and which in addition have been found to be compatible with a large variety of preservative-containing and preservative-free tinting pastes, i.e. in particular no significant phase separation is observed, again over extended storage periods. It has also surprisingly been found that with the aqueous tinting bases of the present invention when tinted with a tinting paste coatings are obtained which exhibit a pronounced stable tinting strength. Even after extended storage periods the tinting strength remains unchanged. And, rather advantageously, the aqueous tinting bases of the present invention upon having been tinted with a tinting paste maintain both their viscosity and their pH stability. Finally, coatings obtained with the aqueous tinting bases of the present invention having been tinted with various tinting pastes show a reduced, i.e. very satisfactory rub-out effect.

The invention is described by the following exemplary compositions, which, however, do not constitute a limitation of the invention. The person skilled in the art can, based on the present description as well as his/her general knowledge, work out further embodiments of the invention without having to be inventive. All data are given in percent by weight. If preparations containing water and/or solvents were used, the indication refers to the solid content of this preparation.

The viscosity of the formulations was determined with a RotoThinner^{®} viscometer (at a temperature of 23°C) designed for measuring low sheer viscosity and was presented in the unit Poise.

The pH value of the coating compositions was determined in accordance with DIN 55659-1:2012-1 at a temperature of 23 ± 2 °C. For this purpose, pH electrodes with a glass membrane were used. Such suitable pH meter is, for example, the SevenCompact meter (measuring range pH 0.00 to 14.00) from Mettler Toledo using the InLab Viscous Pro electrode, also from Mettler Toledo. Rub-out tests were used to determine if the formulation contained flocculated pigments.

| **Aqueous composition A** | |
|---|---|
| **Component** | **Content (wt.-%)** |
| Pigment (TiO₂) | 15,51 |
| Filler (expanded polymeric microspheres) | 14,67 |
| Polymeric organic binder (pure acrylate in the form of a copolymer of acrylates and methacrylates) | 20,18 |
| Wetting agent (alkyl phenol ethoxylates) | 0,48 |
| Wetting agent (alkoxylated ethylenediamine) | 0,15 |
| Organic rheology modifier (non-ionic | 0,53 |
| associative polyurethane -based thickener and cellulose-based rheology modifiers) | |
| Inorganic rheology modifier (magnesium alumino silicate) | 0,54 |
| Alkali metal siliconate (potassium methyl siliconate) | 0,56 |
| Potassium hydroxide | 0,19 |
| Defoamer (polyether and polysiloxane) | 0,28 |
| Water | 46,91 |
| | **100,00 wt.-%** |
| | |
| Viscosity / pH upon preparation | 26 Poise / 11,3 |
| Viscosity / pH after 1 month | 26 Poise / 10,8 |
| Viscosity / pH after 6 months | 23 Poise / 10,6 |
| Viscosity / pH after 7 months | 23 Poise / 10,7 |
| Amount of serum formed | < 1 ml |

Upon storage the aqueous formulation A according to the invention exhibited only some minor, insignificant viscosity and pH drop, however they were well within the acceptable range. Moreover, the values stabilized after six months.

Even when tinted with various tinting pastes (50 ml/L) having a pH in the range of 10,5 to 11,5 and which comprised of an inorganic colored pigment, polyethylene glycol as humectant, polyetherphosphates as dispersants, potassium methyl siliconate as water-soluble alkyl siliconate and conventional thickeners and defoamer, no significant reduction in viscosity or pH was observed after seven months.

Moreover, good, i.e. reduced rub-out results were obtained with coatings of various tinted versions of the aqueous formulation A. For carrying out the rub-out tests a white leneta paper was coated with a tinting base A having been tinted with the afore-mentioned tinting pastes, the coating in each case having a thickness of about 250 µm. The coating was allowed to set for 1 minute, whereafter the wet film was rubbed with circular motions using a gloved finger, and the film was allowed to dry completely. The rubbing motion will disperse any flocculated pigments in the formulation. If there is any flocculation a color difference will be observed between the rubbed area and the untouched area. With the tested tinted tinting bases of the present invention according to formula A no or no significant color difference was observed.

| **Aqueous composition B** | |
|---|---|
| **Component** | **Content (wt.-%)** |
| Filler (expanded polymeric microspheres) | 14,71 |
| Polymeric organic binder (pure acrylate in the form of a copolymer of acrylates and methacrylates) | 24,97 |
| Organic rheology modifier (non-ionic associative polyurethane-based thickener and cellulose-based rheology modifiers) | 0,80 |
| Inorganic rheology modifier (magnesium alumino silicate) | 1,02 |
| Alkali metal siliconate (potassium methyl siliconate) | 0,56 |
| Wetting agent (alkyl phenol ethoxylates) | 0,45 |
| Wetting agent (alkoxylated ethylenediamine) | 0,15 |
| Potassium hydroxide | 0,16 |
| Defoamer (polyether and polysiloxane) | 0,31 |
| Water | 56,87 |
| | **100,00 wt.-%** |
| | |
| Viscosity / pH upon preparation | 24 Poise / 11,7 |
| Viscosity / pH after 1 months | 25 Poise / 11,4 |
| Viscosity / pH after 6 months | 24 Poise / 11,5 |
| Viscosity / pH after 12 months | 24 Poise / 11,1 |
| Amount of serum formed | < 1 ml |

Upon storage the aqueous formulation B according to the invention did not exhibit any significant reduction in viscosity, and only minor, insignificant reduction in pH. And, virtually no phase separation occurred during storage. Even when tinted with various tinting bases (60 ml/L) having a pH in the range of 10,5 to 11,5 and which comprised of an inorganic colored pigment, polyethylene glycol as humectant, polyetherphosphates as dispersants, potassium methyl siliconate as water-soluble alkyl siliconate and conventional thickeners and defoamer, no significant reduction in viscosity was observed after twelve months. The pH did drop some, however it is well within the acceptable range.

Moreover, good, i.e. reduced rub-out results were obtained with coatings of various tinted versions of the aqueous formulation B. For carrying out the rub-out tests a white leneta paper was coated with the tinting base B having been tinted with the afore-mentioned tinting pastes, the coating in each case having a thickness of about 250 µm. The coating was allowed to set for 1 minute, whereafter the wet film was rubbed with circular motions using a gloved finger, and the film was allowed to dry completely. The rubbing motion will disperse any flocculated pigments in the formulation. If there is any flocculation a color difference will be observed between the rubbed area and the untouched area. With the tested tinted tinting bases of the present invention according to formula B no or no significant color difference was observed.

Although modifications and changes maybe suggested by those skilled in the art, it is the intention of the applicant to embody within the patent warranted hereon all changes and modifications as reasonably and probably come within the scope of this contribution to the art. The features of the present invention which are believed to be novel are set forth in detail in the appended claims. The features disclosed in the description, as well as the claims could be essential alone or in every combination for the realization of the invention in its different embodiments.

## Claims

1. Aqueous tinting base, in particular transparent tinting base,
having a pH in the range of 10,0 to 12,5, preferably in the range of 10,5 to 12,0 and more preferably in the range of 11,0 to 11,5, and comprising or being formed of
a) at least one polymeric organic binder based on an aqueous polymer dispersion,
b) at least one organic rheology modifier,
c) at least one inorganic rheology modifier,
d) at least one alkali metal siliconate, in particular potassium methyl siliconate or potassium ethyl siliconate,
e) at least one filler, in particular at least one inorganic filler and/or, in particular expanded, polymeric microspheres,
f) at least one wetting agent, in particular at least one non-ionic wetting agent, and
h) water,
wherein said aqueous tinting base is free of titanium dioxide, in particular free of any pigment.

2. Aqueous tinting base, in particular colored tinting base,
having a pH in the range of 10,0 to 12,5, preferably in the range of 10,5 to 12,0 and more preferably in the range of 11,0 to 11,5, and comprising or being formed of
a) at least one polymeric organic binder based on an aqueous polymer dispersion,
b) at least one organic rheology modifier,
c) at least one inorganic rheology modifier,
d) at least one alkali metal siliconate, in particular potassium methyl siliconate or potassium ethyl siliconate,
e) at least one filler, in particular at least one inorganic filler and/or, in particular expanded, polymeric microspheres,
f) at least one wetting agent, in particular at least one non-ionic wetting agent,
g) at least one pigment, in particular titanium dioxide, and
h) water.

3. Aqueous tinting base according to claim 1 or 2, further comprising
i) at least one dispersing agent.

4. Aqueous tinting base according to any of the preceding claims, wherein
the aqueous polymer dispersion of the polymeric organic binder has a pH in the range of 9,0 to 12,5, preferably in the range of 9,5 to 12,0 and more preferably in the range of 10.0 to 11,5 or 10.00 to below 11,5 and/or, in particular and, wherein said at least one polymeric organic binder is stable at or above a pH of 10,0, preferably 11,0.

5. Aqueous tinting base according to any of the preceding claims, wherein
said at least one polymeric organic binder is selected from the group consisting of vinylacetate copolymers, in particular vinylacetate/ethylene copolymers, hybrid binder, in particular organo-silicate hybrid binder, vinylaromatic copolymers, in particular styrene/acrylate copolymers, pure acrylic copolymers, and mixtures thereof.

6. Aqueous tinting base according to any of the preceding claims, wherein
said tinting base is free of any organic in-can preservatives, preferably free of any organic preservatives.

7. Aqueous tinting base according to any of the preceding claims, wherein
said at least one organic rheology modifier is selected from the group consisting of hydrophobically modified ethylene oxide urethane (HEUR) rheology modifiers, urea modified polyurethanes, amide ester-based rheology modifiers, amide ether-based rheology modifiers, cellulose-based rheology modifiers and mixtures thereof, and wherein said at least one organic rheology modifier in particular is a non-ionic associative polyurethane-based thickener.

8. Aqueous tinting base according to any of the preceding claims, wherein
said at least one inorganic rheology modifier is selected from the group consisting of clay, organically modified clay, silicas, fumed silica, in particular hydrophobic fumed silica, colloidal silica, precipitated silica, organically modified laminar silicates and mixtures thereof, and
wherein said at least one inorganic rheology modifier in particular comprises a magnesium alumino silicate, in particular in the form of nano-sized particles, and/or organically modified smectites and more in particular organically modified hectorite and/or organically modified saponite, more preferably magnesium alumino silicate.

9. Aqueous tinting base according to any of the preceding claims, wherein
said at least one wetting agent comprises or consists of at least one non-ionic surfactant, in particular selected from the group consisting of alkyl polyethylene glycol ethers, ethoxylated fatty acids, ethoxylated fatty alcohols, alkylpolyglycosides, sorbitan ester, alkyne diolethoxylates, ethylene oxide and propylene oxide block copolymers, adducts of ethylene oxide and propylene oxide to alcohols, alkyl phenol ethoxylates, and mixtures thereof, and
wherein said at least one wetting agent is in particular selected from the group consisting of an alkylene oxide/ethylene diamine copolymer, preferably an alkylene oxide/ethylene diamine block copolymer, more preferably an ethylene diamine EO/PO block copolymer, an ethoxylated fatty alcohol, preferably an ethoxylated C12-16 fatty alcohol, more preferably an ethoxylated fatty alcohol having 4 to 12 or 5 to 10 ethylene oxide moieties, and mixtures thereof.

10. Aqueous tinting base according to any of the preceding claims comprising
a first non-ionic wetting agent which is an ethoxylated fatty alcohol, preferably an ethoxylated C12-16 fatty alcohol, more preferably an ethoxylated fatty alcohol having 4 to 12 or 5 to 10 ethylene oxide moieties, and a second non-ionic wetting agent which is different from the first non-ionic wetting agent; in particular an alkylene oxide/ethylene diamine copolymer, preferably an alkylene oxide/ethylene diamine block copolymer, more preferably an ethylene diamine EO/PO block copolymer, or comprising
a first non-ionic wetting agent which is an alkyl phenol ethoxylates, and a second non-ionic wetting agent which is different from the first non-ionic wetting agent; in particular an alkylene oxide/ethylene diamine copolymer, preferably an alkylene oxide/ethylene diamine block copolymer, more preferably an ethylene diamine EO/PO block copolymer.

11. Aqueous tinting base according to any of claims 3 to 10, wherein
said at least one dispersing agent comprises or consist of at least one anionic surfactant, and
wherein said at least one dispersing agent in particular comprises at least one sodium salt of an acrylic polymer, in particular an aqueous system comprising at least one sodium salt of an acrylic polymer.

12. Aqueous tinting base according to any of claims 2 to 11, wherein
said at least one pigment is selected from the group consisting of titanium dioxide, iron oxide, zinc oxide, chromium oxide, cobalt oxides, mixed oxides of cobalt and aluminum, phthalocyanine pigments, spinel pigments, nickel titanate, chromium titanate, manganese titan rutile, rutile mixed phases, bismuth vanadate, ultramarine blue and sulfides of the rare earths, preferably titanium dioxide, zine sulphide, zinc oxide, soot, iron oxide, chromium oxide, cobalt blue, barite, nickel titanate, phthalocyanine pigment, spinel pigment, and/or chromium titanate, more preferably titanium dioxide.

13. Aqueous tinting base according to any of the preceding claims, wherein
said tinting base is free of any water glass and free of any silica sol.

14. Aqueous tinting base according to any of the preceding claims, wherein
said inorganic rheology modifier consist of or comprises a magnesium alumino silicate, in particular in the form of nano-sized particles, and/or organically modified smectites and more in particular organically modified hectorite and/or organically modified saponite, more preferably magnesium alumino silicate, and wherein said organic rheology modifier consist of or comprises at least one nonionic associative thickener, in particular a non-ionic associative polyurethane-based thickener, and/or, in particular and, at least one cellulose-based rheology modifier.

15. Aqueous tinting base according to claim 1 or to any of claims 3 to 14 if and to the extent referring directly or indirectly back to claim1, comprising
5,0 to 32,0 wt.-%, in particular 10,0 to 28,0 wt.-%, of component a) (solids content),
0,2 to 5,0 wt.-%, in particular 0,4 to 2,5 wt.-%, of component b),
0,2 to 4,0 wt.-%, in particular 0,3 to 2,0 wt.-%, of component c),
0,1 to 3,0 wt.-%, in particular 0,2 to 1,5 wt.-%, of component d),
5,0 to 25,0 wt.-%, in particular 10,0 to 20,0 wt.-%, of component e),
0,05 to 1,5 wt.-%, in particular 0,1 to 1,2 wt.-%, of component f),
30,0 to 75,0 wt.-%, in particular 40,0 to 65,0 wt.-%, of component h),
0 to 1,0 wt.-%, in particular 0,1 to 0,8 wt.-%, of component i),
wherein the components forming the aqueous tinting base always add up to 100,0 wt.-%.

16. Aqueous tinting base according to claim 2 or to any of claims 3 to 14, if and to the extent that these claims refer back to claim 2, comprising
5,0 to 32,0 wt.-%, in particular 10,0 to 28,0 wt.-%, of component a) (solids content),
0,1 to 5,0 wt.-%, in particular 0,3 to 2,5 wt.-%, of component b),
0,1 to 4,0 wt.-%, in particular 0,3 to 2,0 wt.-%, of component c),
0,1 to 3,0 wt.-%, in particular 0,2 to 1,5wt.-%, of component d),
5,0 to 25,0 wt.-%, in particular 10,0 to 20,0 wt.-%, of component e),
0,05 to 1,5 wt.-%, in particular 0,1 to 1,2 wt.-%, of component f),
5,0 to 30,0 wt.-%, in particular 10,0 to 25,0 wt.-%, of component g),
30,0 to 75,0 wt.-%, in particular 40,0 to 65,0 wt.-%, of component h),
0 to 1,0 wt.-%, in particular 0,1 to 0,8 wt.-%, of component i),
wherein the components forming the aqueous tinting base always add up to 100,0 wt.-%.

17. A kit-of-parts tinting system for adjusting the colour of coating systems, comprising
a) at least one tinting base according to any of the preceding claims and
b) at least one, preferably at least two aqueous tinting compositions, particularly preferably at least three aqueous tinting compositions, containing at least one pigment, wherein said aqueous tinting compositions are in particular preservative-free.

18. Aqueous coating formulation obtained by mixing components a) and b) of the kit-of-parts tinting system of claim 17.

19. Use of the aqueous coating formulation according to claim 18 for coating interior walls and/or ceilings.
